# EUROPEAN PATENT APPLICATION

(11) **EP 2 264 089 A2**
(43) Date of publication of application: **22.12.2010**
(21) Application number: 10166252.6
(22) Date of filing: 17.06.2010
(51) Int. Cl.: C08J 9/00, C08K 3/34

(54) **Method for making filled-in polymers and polymeric foams**

(30) Priority: 19.06.2009 IT MI20091088
(71) Applicant: Centro di Ricerca Interuniversitario C.I.R.T.I.B.S., 80125 Napoli (IT)
(72) Inventor: De Iorio, Isabella, I-80125, NAPOLI (IT); Leone, Claudio, I-80125, NAPOLI (IT); Lopresto, Valentina, I-80125, NAPOLI (IT)
(74) Representative: Cicogna, Franco

(57) **Abstract**

A method for making filled-in polymeric foams for improved mechanical and thermally and acoustically insulating property panels for building and furniture applications comprises the step of providing a liquid thermosetting resin and foaming said liquid thermosetting resin while filling therein at least a byproduct and waste material comprising at least a waste basalt fiber material.

## Description

### BACKGROUND OF THE INVENTION

The present invention relates, according to a first aspect thereof, to a method for making filled-in polymers and polymeric foams, preferably polyurethane and epoxidic foams, for making thermally and acoustically insulating sandwich panels and other components to be used in the building and furniture field.

In a further aspect thereof, the invention also relates to a basalt fiber filled in polyurethanic and epoxidic foams for the above applications made by the inventive method.

As is known, basalt is conventionally used in the form of a rock wool, and, in processing a basalt material, wastes consisting of very short basalt fibers or powders are generated.

On the other hand, for meeting recent environmental polluting requirements, it is necessary to recycle basalt waste products which, however, are waste materials which cannot be easily recovered.

Also known is the fact that rock wool or basalt fiber material is an ideal material for use, owing to its thermal and acoustical insulating properties together with its comparatively low making cost, to make structures of construction and furniture applications.

For making and properly using basalt thermally and acoustically insulating materials it is necessary to process raw basalt material to transform it into short fibers in which are always present small defects including resolidified material drops hindering desired applications from being easily achieved.

Thus, and as stated, the above basalt fibers constitute a waste material which may be difficulty recycled, and must be disposed of while meeting very strict disposal rules involving a great increase of the final product cost.

### SUMMARY OF THE INVENTION

Thus, the aim of the present invention is to provide a method for producing novel thermally and acoustically plastics insulating foamed materials, including a polymeric matrix filled-in at least by waste basalt fiber materials.

Within the scope of the above mentioned aim, a main object of the invention is to provide such a method for making thermally insulating plastics foams which are jointly filled-in by said waste basalt fiber materials and by further waste materials synergically cooperating with the waste basalt fiber materials to provide thermally and acoustically insulating plastics foams having improved thermally and acoustically insulating and mechanical properties, thereby being ideally suitable for making thermally and acoustically insulating sandwich panels or other components for building and furniture applications.

A further object of the present invention is to provide such a novel method allowing to make filled-in plastics foams, in particular thermoplastic filled-in foams starting from plastics materials which at present are considered as unsuitable for foaming processes, such as, for example, epoxidic resins.

Yet another object of the present invention is to provide such a method also allowing to recover basalt fibers from already existing waste thermally and acoustically insulating foamed plastics panels.

Further characteristics and advantages of the present invention and plastics foams made thereby will become more apparent hereinafter from the following detailed disclosure of preferred embodiments thereof.

As stated, the present invention comprises, in a first aspect thereof, a novel method for recycling basalt waste materials, to provide a novel composite filled-in plastics foam material having very improved mechanical and thermally and acoustically insulating properties, wherein said method provides to fill-in or embed in a plastic foam, preferably polyurethanic or epoxidic foam, either only byproducts from basalt fiber processes, or also further byproducts and waste materials derived, according to a main feature of the invention, from the skin or hide tanning industry.

In particular, according to a further feature of the invention, the plastic materials used for making, by the inventive method, the inventive thermoplastic foams comprise thermosetting polyurethanic and epoxidic resins which, at the start of the foaming process, are preferably supplied in a liquid form.

It has been surprisingly found that the above polymeric matrix thermosetting resins stabilize the basalt fibers, thereby preventing said basalt fibers from polluting the encompassing environment.

Moreover, the inclusion or filling-in of the above mentioned byproducts and waste materials in the polyurethane and epoxidic resin matrix allows to advantageously improve the mechanical and physical properties of said resins, thereby making them ideal as novel thermally and insulating foamed filled-in materials, having an improved stiffness, and ideally suitable for making thermally and acoustically insulating panels for building and furniture applications, as well as for boat, ship and train sandwich panels and interiors and semi-structural components.

A further feature of the inventive method is that it allows to control the foam pores with respect to the bubble size and their diffusion through the polymeric matrix material.

The basalt fibers filling-in the polyurethanic and epoxidic foams have preferably a fiber length or size from 100 microns to 10 millimeters, said fibers being suitable to stabilize the thermoplastics material foaming reaction and prevent its pores from excessively increasing with a consequent foam collapsing, while allowing to better control the final size of the made articles of manufacture.

The inventive polyurethanic and epoxidic filled-in foams, in particular, have a low specific weight, and mechanical properties which are very improved with respect to those of the foam per se, together with a low thermal conductivity and a good acoustical absorption coefficient, thereby said novel polyurethane and epoxidic foams are ideally suitable for making novel improved high dynamic load absorbing and thermally and acoustically sandwich panels and components for building and furniture applications.

The made sandwich panels are self-supporting components and may be also used, for example, for making coating, underfloor and covering arrangements.

For further specifying the inventive method, is hereinafter disclosed an example of a novel thermoplastic polyurethanic foam filled-in by very short basalt fibers, in different rates, having, for example, a length or size of 100 microns.

From laboratory tests carried out on this polyurethane foam it has been found that it was possible to easily make, by suitably selecting the polyurethane material filling-in rate, a polyurethanic foam having an enhanced stiffness, a low thermal conductibility and very improved acoustical insulation characteristics.

As a second example of the invention, a novel epoxidic foam has also been made by including or filling-in therein, in addition to the mentioned basalt fibers, also byproducts and/or waste materials derived from the skin and hide tanning industry.

In particular, this second waste material comprised waste skin and hide trimmed parts, from leather tanning processes, comprising waste skin and hide slit, shaved and cut parts derived from skin and hide garment, shoe and furniture making processes.

From this second example, it has surprisingly found that the inclusion, together with the waste basalt fibers, of the mentioned tanning waste skin and hide materials, allowed to easily foam, in addition to polyurethanic resins, also an epoxidic resin material, which was previously considered unfoamable, and this owing to the disclosed synergic cooperation of the basalt fibers and waste skin and hide parts.

Moreover, the inclusion of said waste skin and hide materials greatly improves the foaming of the polyurethanic and epoxidic resins so as to allow to correspondingly reduce the amount of the conventionally used foaming agents which, as is known, are very objectionable from a pollution and health standpoint.

Thus, the invention advantageously allows to recycle also tanning waste materials which previously required a very expensive disposal of method, said synergically cooperating waste basalt fibers improving the foam mechanical properties without changing the material physical properties from those of the basic polymer.

By way of a further example, laboratory tests performed on thermoplastic polyurethane foams, filled-in by wet-blue shaved skin and hide materials, up to a rate of 40%, have clearly shown a simultaneous increase of the filled-in foam porosity and mechanical strength.

Further tests have also shown that it was possible to easily recycle an amount of wet-blue shaved skin and hide waste material also larger than 40% by weight, thereby to greatly reducing both the cost of disposing of the basalt fibers and skin and hide waste materials and that of the raw waste basalt fiber and skin and hide material for making said thermally and acoustically insulating panels.

Thus, it has been found that the invention fully achieves the intended aim and objects.

In fact, the invention has provided am improved method which, in a first main aspect thereof, allows to use only a recycled filling-in waste basalt fiber material for filling-in a polyurethane foaming resin which method greatly improves the mechanical and physical performance of the polyurethane foams allowing them to be used for making thermally and acoustically insulating panels for building and furniture applications.

Moreover, the inventive method allows, in a second main aspect thereof, to also use, together with the waste basalt material, and in a synergic mixture therewith, skin and hide byproducts and waste materials, for making polyurethanic and epoxidic foams for thermally and acoustically insulating panels also having very improved mechanical properties, a light weight and density.

A further advantage of the invention is that, in particular, the basalt fibers may also be easily derived by incinerating existing waste or exhausted basalt filled-in foam panels, that is by processing said exhaust panel by a burning process.

While the invention has been disclosed with reference to preferred embodiments thereof, it should be apparent that the disclosed embodiments are susceptible to several modifications and variations, all of which will come within the scope of the accompanying claims.

## Claims

1. A method for making filled-in polymeric foams for improved mechanical and thermally and acoustically insulating property panels for building and furniture applications, **characterized in that** said method comprises the step of providing a liquid thermosetting resin and foaming said liquid thermosetting resin while filling therein at least a byproduct and waste material comprising at least a waste basalt fiber material.

2. A method according to claim 1, **characterized in that** said byproduct and waste material comprises, in addition to said waste basalt fiber material, a further waste material comprising waste skin and hide trimmed parts from skin and hide tanning processes.

3. A method according to claim 1, **characterized in that** said at least a waste basalt fiber material comprises basalt fibers having a basalt fiber length from substantially 100 microns to 10 mm.

4. A method according to claims 1 to 3, **characterized in that** said thermosetting resin comprises a foaming polyurethanic and epoxidic resins.

5. A method according to claims 1 to 4, **characterized in that** said basalt fibers are derived from an exhausted waste basalt filled-in foamed panel incinerating process.

6. A method according to claim 2, **characterized in that** said waste skin and hide material comprises waste skin and hide slit, shaved and cut parts from skin and hide garments, shoe and furniture making processes.

7. A filled-in polymeric foam for making, by a method according to one or more of claims 1 to 6, improved mechanical and thermally and acoustically insulating property panels for building and furniture applications, **characterized in that** said polymeric foam is a thermoplastic polymeric foam filled-in at least by a waste basalt fiber material comprising basalt fibers having a length from substantially 100 microns to 10 mm.

8. A filled-in polymeric foam according to claim 7, **characterized in that** said polymeric foam is further filled-in, in addition to said waste basalt fibers, by waste skin or hide material parts.

9. A filled-in polymeric foam according to claim 7, **characterized in that** said polymeric foam is a polyurethanic polymeric foam.

10. A filled-in polymeric foam according to claim 7, **characterized in that** said polymeric foam is an epoxidic polymeric foam.
